# EUROPEAN PATENT SPECIFICATION

(11) **EP 2 881 676 B1**
(45) Date of publication and mention of the grant of the patent: **05.09.2018**
(21) Application number: 13825049.3
(22) Date of filing: 26.07.2013
(51) Int. Cl.: F24F 13/20, G08C 17/02

(54) **OPERATION SYSTEM FOR HOME ELECTRIC APPLIANCES AND PROGRAM FOR OPERATING HOME ELECTRIC APPLIANCES**
BETRIEBSSYSTEM FÜR ELEKTRISCHE HAUSHALTSVORRICHTUNGEN UND PROGRAMM ZUM BETREIBEN ELEKTRISCHER HAUSHALTSVORRICHTUNGEN
SYSTÈME D'ACTIONNEMENT POUR APPAREILS MÉNAGERS ÉLECTRIQUES ET PROGRAMME D'ACTIONNEMENT D'APPAREILS MÉNAGERS ÉLECTRIQUES

(30) Priority: 30.07.2012 JP 2012167971; 02.08.2012 JP 2012172264
(43) Date of publication of application: 10.06.2015
(73) Proprietor: Panasonic Intellectual Property Management Co., Ltd., Osaka-shi, Osaka 540-6207 (JP)
(72) Inventor: KODA, Toshimitsu, Osaka-shi, Osaka 540-6207 (JP); KAMODA, Hirokazu, Osaka-shi, Osaka 540-6207 (JP); IUCHI, Akira, Osaka-shi, Osaka 540-6207 (JP); NITTA, Takehiko, Osaka-shi, Osaka 540-6207 (JP); YAMAOKA, Masaru, Osaka-shi, Osaka 540-6207 (JP); SAKATA, Tsuyoshi, Osaka-shi, Osaka 540-6207 (JP); MAKI, Masahiro, Osaka-shi, Osaka 540-6207 (JP)
(74) Representative: Eisenführ Speiser
(86) International application number: PCT/JP2013/004558
(87) International publication number: WO 2014/020880

(56) References cited:
- EP-A2- 1 133 120
- JP-A- 2001 256 156
- JP-A- 2006 050 524
- JP-A- 2006 129 219
- JP-A- 2008 124 960
- JP-A- 2010 033 279

## Description

### Technical Field

The invention relates to a control system for controlling a household electrical appliance and a program for controlling a household electrical appliance.

### Background Art

Conventionally, a control of a household electrical appliance by the use of a mobile terminal such as mobile telephone is performed. For example, a control system for a household electrical appliance described in Patent document 1 has a communication device incorporated in the household electrical appliance, a center server connected to an internet, and a relay device connected to the internet and relaying a communication between the communication device and a mobile terminal. The center server is accessed by the mobile terminal through the internet and then connects the mobile terminal to the corresponding relay device. By connecting the mobile terminal to the communication device through the internet and the relay device, the household electrical appliance can be controlled by the mobile terminal.

### Prior Art Document(s)

Patent Document 1: Japanese Patent No. 4664524

See also publication EP 1 133 120. f

### Summary of the Invention

### Problems to be solved by the Invention

When a user is in a house in which the household electrical appliance is placed , for example, air conditioner, the user often uses mobile terminal so as to control the air conditioner without using a remote controller of the air conditioner. In the control system for the household electrical appliance of the Patent Document 1 configured to control the air conditioner through the internet, a congestion of the internet and like often delay a response of the air conditioner to the user controls on the mobile terminal. The user therefore cannot control the air conditioner by the use of the mobile terminal in a stress-free situation.

Accordingly, it is an object of the invention to provide a control system for controlling a household electrical appliance with which the user can control the household electrical appliance such as an air conditioner by the use of a mobile terminal in a stress-free situation.

### Means to Solve the Problems

In order to achieve the above object, the present invention has the following constitutions.

In one aspect of the invention, there is provided a control system for controlling a household electrical appliance, the control system for controlling the household electrical appliance comprising:
a mobile terminal capable of connecting to a router device and an internet and sending a control signal for controlling the household electrical appliance;
a communication device connected to the household electrical appliance and receiving the control signal; and
a relay device connected to the router device and relaying communication between the communication device and the mobile terminal,
wherein the mobile terminal and the relay device are adapted to have a first communication between the mobile terminal and the relay device only through the router device and a second communication between the mobile terminal and the relay device through the internet and the router device, and
the mobile terminal is adapted to enable a user to select the first or second communication by the use of the mobile terminal.

In another aspect of the invention, there is provided a program for controlling a household electrical appliance installed in a mobile terminal connectable to a router device and an internet, the program for controlling the household electrical appliance making the mobile terminal function as,
a means for sending a control signal for controlling the household electrical appliance,
a means for having a first communication only through the router device and a second communication through the internet and the router device with a relay device relaying a communication between the mobile terminal and a communication device, the communication device connected to the household electrical appliance and receiving the control signal, and
a means for enabling the user to select the first or second communication.

### Effects of the Invention

According to the invention, a user can select the first communication only through the router device or the second communication through the internet and the router device, as a communication between the mobile device and the relay device. By selecting the first communication only through the router device, the user being in a house in which the household electrical appliance is placed can control the household electrical appliance by the use of the mobile terminal in a stress-free situation. By selecting the second communication through the router device and the internet, the user being outside of the house can control the household electrical appliance by the use of the mobile terminal.

### Brief Description of the Drawings

The above aspects and features of the present invention will become more apparent from the following description of preferred embodiments thereof with reference to the accompanying drawings, and wherein:
Fig. 1 schematically shows a configuration of a control system for an air conditioner according to an embodiment of the invention,
Fig. 2 shows an example of a control screen for the air conditioner,
Fig. 3 is a flow diagram showing an exemplary sequence of an initial setting for controlling the air conditioner by the use of the mobile terminal,
Fig. 4 shows an example of an entry screen for entering an identification information of the gateway device,
Fig. 5 shows an example of an information screen of the gateway device,
Fig. 6 shows an example of a screen for prompting the user to control a wireless communication adaptor,
Fig. 7 conceptually shows an information held by a server device about a correspondence relationship between the mobile terminal (user), the gateway device, the wireless communication adaptor, and the air conditioner,
Fig. 8 shows an example of user registration screen for the air conditioner,
Fig. 9 is a perspective view showing an appearance of the air conditioner connected to the wireless communication adaptor,
Fig. 10 is a perspective view showing an inside of the air conditioner,
Fig. 11 is a perspective view showing a configuration of the wireless communication adaptor,
Fig. 12 shows an attachment the wireless communication adaptor to the air conditioner,
Fig. 13 is a front view of a part of the air conditioner and shows an exemplary wiring layout of a lead wire of the wireless communication adaptor, and
Fig. 14 is a perspective view of a part of the air conditioner and show an exemplary wiring layout of a lead wire of the wireless communication adaptor.

### Embodiments for Carrying out the Invention

A aspect of the invention is a control system for controlling a household electrical appliance, the control system for controlling the household electrical appliance comprising:
a mobile terminal capable of connecting to a router device and an internet and sending a control signal for controlling the household electrical appliance;
a communication device connected to the household electrical appliance and receiving the control signal; and
a relay device connected to the router device and relaying communication between the communication device and the mobile terminal,
wherein the mobile terminal and the relay device are adapted to have a first communication between the mobile terminal and the relay device only through the router device and a second communication between the mobile terminal and the relay device through the internet and the router device, and
the mobile terminal is adapted to enable a user to select the first or second communication by the use of the mobile terminal.

According to such configuration of the control system for controlling the household electrical appliance, a user can select the first communication only through the router device or the second communication through the internet and the router device, as a communication between the mobile device and the relay device. By selecting the first communication only through the router device, the user being in a house in which the household electrical appliance is placed can control the household electrical appliance by the use of the mobile terminal in a stress-free situation. By selecting the second communication through the router device and the internet, the user being outside of the house can control the household electrical appliance by the use of the mobile terminal.

The control system for controlling the household electrical appliance may have a server device connected to the internet and authenticating whether a mobile terminal accessing to the relay device only through the router device or through the internet and the router device is the mobile terminal of a valid user allowed to communicate with the relay device. Also, the relay device may have the first or second communication with the mobile terminal authenticated by the server device as the mobile terminal of the valid user.

According to such configuration, the household electrical appliance can be controlled only by the mobile terminal authenticated as the mobile terminal of the valid user.

The control system for controlling the household electrical appliance may have a sever device connected to the internet, associating an identification information of the mobile terminal or the user, an identification information of the relay device, and an identification information of at least one communication device connected to the relay device or at least one household electrical appliance connected to the communication device, and holding the associated information.

On the basis of the identification information of the mobile terminal or the user, the identification information of the relay device, and the identification information of at least one communication device connected to the relay device or at least one household electrical appliance connected to the communication device associated and held by the server device, the manufacturer of the household electrical appliance can understand a connection environment (usage environment) between the household electrical appliance and the mobile terminal through the relay device. On the other hand, the user can easily restore the connection environment between the household electrical appliance and the mobile terminal through the relay device, for example, when the user renews the mobile terminal.

The communication device may be detachably provided on the household electrical appliance.

According to such configuration, each of the household electrical appliances can be provided with the communication device.

The household electrical appliance may be an air conditioner, and the communication device may be connected to an operation control part of the air conditioner for controlling an air-conditioning operation.

According to such configuration, the air conditioner can be controlled by the mobile terminal.

In the case where the household electrical appliance is the air conditioner, the communication device may have a communication device body communicating with the relay device, a connecter detachably connecting to a communication device connection terminal of the operation control part of the air conditioner, a lead wire connecting the communication device body and the connector, and an attachment for attaching the communication device body to the air conditioner or a room in which the air conditioner is placed.

According to such configuration, the communication device can be attached to the air conditioner or a house in which the air conditioner is placed on the basis of a communication condition between the communication device and the relay device. Consequently, the communication between the communication device and the relay device becomes stable and thus the user surely can control the air conditioner by the use of the mobile terminal.

The air conditioner may have a body and a front panel openably covering a front portion of the body, the communication device connection terminal of the operation control part of the air conditioner is disposed on the front portion of the body of the air conditioner, and the attachment of the communication device is adapted to hold a housing rim of the body of the air conditioner.

According to such configuration, the connector of the communication device can be connected to the communication device connection terminal disposed on the front portion of the body of the air conditioner shortly after the front panel is opened. Also, the communication device body of the communication device can be attached easily to the air conditioner since the attachment holds the housing rim of the body of the air conditioner. Consequently, communication device can be attached easily to the air conditioner in a short time.

The housing rim of the body of the air conditioner held by the attachment may be positioned at a position at which the communication device with the attachment holding the housing rim is not opened up to an air blown from an outtake opening of the air conditioner.

According to such configuration, it is suppressed that, during a cooling operation, a dew condensation (beading) occurs on a surface of the communication device body of the communication device opened up to a cold air. Therefore, it is suppressed that the dew condensation interrupts the communication between the communication device body and the relay device. Consequently, during the cooling operation of the air conditioner, a quality in the communication between the communication device body and the relay device is highly maintained, and thus a reliability of the communication is improved.

The operation control part of the air conditioner may be disposed on a front portion of a body of the air conditioner, and the communication device connection terminal may be mounted directly on the operation control part.

According to such configuration, as compared with the case where the communication device connection terminal is mounted indirectly on the operational control part through a lead wire for example, workability in an assembly is improved and a cost is decreased.

It is preferable to provide a program for controlling a household electrical appliance installed in a mobile terminal connectable to a router device and an internet, the program for controlling the household electrical appliance making the mobile terminal function as,
a means for sending a control signal for controlling the household electrical appliance,
a means for having a first communication only through the router device and a second communication through the internet and the router device with a relay device relaying a communication between the mobile terminal and a communication device, the communication device connected to the household electrical appliance and receiving the control signal, and
a means for enabling the user to select the first or second communication.

According to such program, the household electrical appliance can be controlled by a mobile terminal used widely such as smartphone.

Hereinbelow, the invention will be described with reference to an embodiment. It is noted that the invention is not limited by the following embodiments.

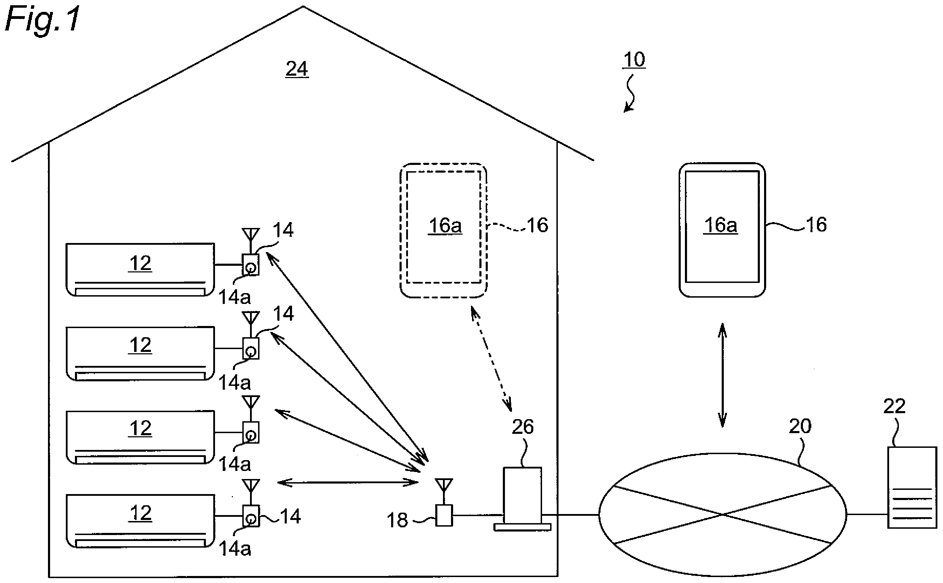

Fig. 1 schematically shows a configuration of a control system for a household electrical appliance according to an embodiment of the invention.
Although the control system for the household electrical appliance explained below is a control system for an air conditioner as an example of the household electrical appliance, the household electrical appliance of the invention is not limited to the air conditioner.

The control system 10 for the air conditioner shown in Fig. 1 is a system for controlling at least one air conditioner by the use of a mobile terminal.
As shown in Fig. 1, the control system 10 for the air conditioner has a plurality of air conditioners 12, wireless communication adaptors (communication devices) 14 provided on the air conditioner 12 respectively, a mobile terminal 16 owned by a user, a gateway device (relay device) 18 for relaying communication between the wireless communication adaptors 14 and the mobile terminal 16, an internet 20, and a server device 22 connected to the internet 20.

The air conditioners 12 are placed in a house 24 owned by the user owning the mobile terminal 16. The wireless communication adaptors 14 are connected to the air conditioners 12 respectively.

The wireless communication adaptors 14 are connected to an operation control part of the air conditioners 12. Details of the connection of the air conditioner 12 and the wireless communication adaptor are explained below. The wireless communication adaptors 14 are adapted to communicate with the gateway device 18. The wireless communication adaptor 14, as described below, receive a control signal for controlling the air conditioner sent from the mobile terminal 16 thorough the gateway device 18, and then send the received control signal to the operation control part of the air conditioners 12. The operation control part controls an air conditioning operation of the air conditioner 12 on the basis of the control signal.

The wireless communication adaptor 14 also, as described below, are adapted to obtain an identification information (for example, a production number, model number, and like) of the air conditioner 12 form the operation control part of the air conditioner 12 and then send it to the gateway device 18.

The mobile terminal 16 is, for example, a portable terminal used widely such as smartphone, tablet PC (personal computer), and has, in the embodiment, functions to connect to the internet 20 and to communicate with the gateway device 18.

The mobile terminal 16 (for example, a smartphone) is adapted to connect to the internet 20 through a telephone network (for example, 3G network).
In addition to or alternatively, the mobile terminal 16, for example, is adapted to have a Wi-Fi communication function for communicating with the internet 20 through a public wireless network.

By connecting to the internet 20, the mobile terminal 16, for example can obtain a program for controlling the air conditioner 12 from a home page of a manufacturer manufacturing the air conditioner12 through the internet 20. The obtained program is installed in the mobile terminal 16. By activating the installed program, the air conditioner 12 can be controlled by the mobile terminal 16. That is, the mobile terminal 16 becomes available to generate a control signal for controlling the air conditioner 12 and send it.

The mobile terminal 16 also is adapted to connect to a router device 26 by no use of the internet 20 through a communication technology used widely such as, for example, Wi-Fi communication, Bluetooth (trademark), infrared communication, and then to communicate with the gateway device 18 through the router device 26. The necessary device (such as Wi-Fi antenna) is incorporated in the mobile terminal 16.

The gateway device 18 is a device for relaying communication between the wireless communication adaptors 14 and the mobile terminal 16, and thus is configured to communicate with the wireless communication adaptor 14 and communicate with the mobile terminal 16 through the router device 26. The gateway device 18 also is placed in the user's house 24 in which the air conditioners 12 are placed and is connected to the router device 26 connecting to the internet 20.

For example, the gateway device 18 is adapted to communicate with the wireless communication adaptor 14 by the use of a frequency of a signal within a specified low power radio-specified small band (924.0-928.0MHz). A frequency band of communication between the gateway device 18 and the wireless communication adaptor 14 preferably is a low frequency band within which a signal can far-reach.

The gateway device 18 also is adapted to connect to the mobile terminal 16 through the router device 26. That is, the gateway device 18 is adapted to have a communication (first communication) with the mobile terminal 16 only through the router device 26 without passing through the internet 20.

Further, the gateway device 18 is adapted to be able to connect to the internet 20 through the router device 26. Therefore, the gateway device 18 can have a communication (second communication) with the mobile terminal 16 and have a communication with the server device 22, through the internet 20 and the router device 26.

That is, the gateway device 18 is adapted to communicate with the mobile terminal 16 not by the use of the internet 20 (the first communication only through the router device 26) and by the use of the internet 20 (the second communication through the internet 20 and the router device 26). This reason is explained below.

The server device 22 is a server device arranged by the manufacturer of the air conditioner 12 and stores an information associated with the air conditioners 12, wireless communication adaptors 14, mobile terminal 16, and gateway device 1 so as to perform an authentication of the mobile terminal 16 accessing the gateway device 18 and like.

Hereinbelow, an example of control of the air conditioner 12 by the use of the mobile terminal 16 is explained. In this example, the mobile terminal 16 is a smartphone having a touch panel 16a and is with an installed control program for the air conditioner having already been started. In this example, the mobile terminal 16 is Wi-Fi communicated with the router device 26.

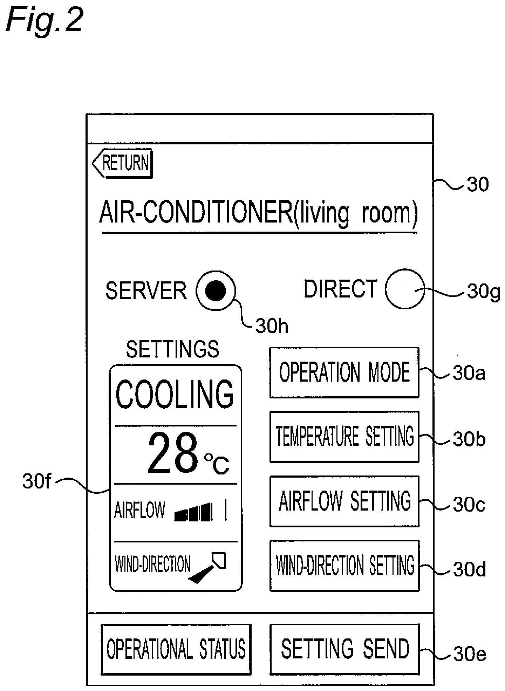

Fig. 2 shows an example of a control screen 30 for the air conditioner 12 displayed in the touch panel 16a of the mobile terminal 16. The mobile terminal 16 is adapted to display the control screen 30 in the touch panel 16a when the air conditioner is operated.

When there are a plurality of air conditioners 12, the mobile terminal 16 is adapted to display a selection screen for the air conditioners such that the user can select the air conditioner operated by the mobile terminal 16.

As shown in Fig. 2, the control screen 30 for controlling the air conditioner 12 includes a plurality of buttons 30a-30e for setting an operation of the air conditioner. The control screen 30 shown in Fig. 2 is a control screen for operating the air conditioner 12 placed in a living room.

An "operation mode" button 30a is a button through which the user selects an operation mode. When the user touches the "operation mode" button 30a, the mobile terminal 16 displays, for example, an operation mode select window (not shown), through which the user selects one air-conditioning operation mode from a plurality of air-conditioning operation mode such as heating operation, cooling operation, and dehumidifying operation, in the touch panel 16a. The mobile terminal 16 displays the user-selected operation mode in a current settings indicating part 30f in the control screen 30 and stores it in a memory part (not shown).

A "temperature setting" button 30b is a button through which the user sets a temperature of an air blown from the air conditioner 12. When the user touches the "temperature setting" button 30b, the mobile terminal 16 displays, for example, a temperature entry window (not shown), through which the user enters a desired temperature, in the touch panel 16a. The mobile terminal 16 displays the user-entered temperature in the current settings indicating part 30f in the control screen 30 and stores it in the memory part.

An "airflow setting" button 30c is a button through which the user sets a flow of the air blown from the air conditioner 12. When the user touches the "airflow setting" button 30c, the mobile terminal 16 displays, for example, an airflow entry window (not shown), through which the user enters a desired flow, in the touch panel 16a. The mobile terminal 16 displays the user-entered flow in the current settings indicating part 30f in the control screen 30 and stores it in the memory part.

A "wind-direction setting" button 30d is a button through which the user sets a direction of the air blown from the air conditioner 12. When the user touches the "wind-direction setting" button 30d, the mobile terminal 16 displays, for example, a wind-direction entry window (not shown), through which the user enter a desired wind-direction, in the touch panel 16a. The mobile terminal 16 displays the user-entered wind-direction in the current settings indicating part 30f in the control screen 30 and stores it in the memory part.

A "settings send" button 30e is a button for sending an information including the operation mode, temperature, airflow, and wind-direction set by the user by the use of the mobile terminal 16 to the air conditioner 12.

The mobile terminal 16 is adapted to send the gateway device 18 a control signal for the air conditioner 12 including the information about the operation mode, temperature, airflow, and wind-direction set by the user and stored in the memory part, that is, indicated in the current settings indicating part 30f, when the user touches the "setting send" button 30e.

The control signal includes an identification information of the air conditioner 12 to be controlled. Therefore, the gateway device 18 can send the control signal to the air conditioner 12 controlled by the mobile terminal 16 through the wireless communication adaptor 14 connected thereto.

Then, the mobile terminal 16 sends the control signal for the air conditioner 12 to the gateway device 18 only through the router device 26 without passing through the internet 20 or through both the internet 20 and the router device 26. Specifically, the mobile terminal 16 is adapted to send the control signal to the gateway device 18 on the basis of a transmission setting at the timing at which the user touches the "settings send" button 30e.

As shown in Fig. 2, the control screen 30 is provided with buttons 30g and 30h for the transmission setting, in particular, through which the user selects whether the communication between the mobile terminal 16 and the gateway device 18 is only through the router device 26 without passing through the internet 20 or through both the internet 20 and the router device 26.

The mobile terminal 16 is adapted to configure a "direct" communication for communicating only through the router device 26 as the communication between the mobile terminal 16 and the gateway device 18, when the user touches the "direct" button 30g.

In the "direct" communication configuration, the control signal for the air conditioner 12 is sent from the mobile terminal 16 to the gateway device 18 only through the router device 26, when the user touches the "settings send" button 30e. The gateway device 18 sends the received control signal to the wireless communication adaptor 14. When the wireless communication adaptor 14 receives the control signal including the identification information of the air conditioner 12 connected thereto, the wireless communication adaptor 14 sends the control signal to the air conditioner 12.

On the other hand, the mobile terminal 16 is adapted to configure a "server" communication for communicating through both the internet 20 and the router device 26 as the communication between the mobile terminal 16 and the gateway device 18, when the user touches the "server" button 30h.

In the "server" configuration, the control signal for the air conditioner 12 is sent from the mobile terminal 16 to the server device 22 through the internet 20 and the router device 26. The server device 22 then sends the received control signal to the gateway device 18 through the internet 20 and the router device 26. The gateway device 18 sends the received control signal to the wireless communication adaptor 14.

The control signal for the air conditioner may be sent from the mobile terminal 16 to the gateway device 18 through the internet 20 and the router device 26 without passing through the server device 22.

As noted above, the user selects methods of the communication between the mobile terminal 16 and the gateway device 18. This reason is that there are a case where the mobile terminal 16 is used outside of the user's house 24 (solid line) and a case where the mobile terminal 16 is used in the house 24 (two-dot chain line), as shown in Fig. 1.

As shown by the solid line in Fig. 1, In the case where the mobile terminal 16 is outside of the house 24, in the broad sense, in the case where the mobile terminal 16 is at a position at which the mobile terminal 16 cannot communicate with the router device 26 directly, the mobile terminal 16 can control the air conditioner 12 by communicating with the gateway device 18 through the internet 20 and the router device 26. That is, the user, which is outside of the house 24, touches the "server" button 30h so as to set to the "server" communication, and thereby enable the user to control the air conditioner 12 through the mobile terminal 16.

On the other hand, as shown by the two-dot chain line in Fig. 1, in the case where the mobile terminal 16 is in the house 24, in the broad sense, in the case where the mobile terminal 16 is at a position at which the mobile terminal 16 can communicate with the router device 26 directly, the mobile terminal 16 can communicate with the gateway device 18 only through the router device 26 or through the internet 20 and the router device 26. That is, the user can select one of the "direct" communication and the "server" communication.

However, if the user in the house 24 wishes to frequently control the air conditioner 12 by the use of the mobile terminal 16, the "server" communication through the use of the internet 20 and the router device 26 is unsuitable as the communication between the mobile terminal 16 and the gateway device 18. This reason is that it is possible to cause a delay of a response to the user controls from the air conditioner 12 to the mobile terminal 16 by the reason of a congestion of the internet 20 and like. Consequently, the user may not control the air conditioner 12 by the use of the mobile terminal 12 in a stress-free situation.

In order to overcome this problem, the control system of the air conditioner 12 is adapted to have a communication unaffected by the congestion of the internet 20 and like, that is, communication between the mobile terminal 16 and the gateway device 18 only through the router device 26 without passing through the internet 20. Since the mobile terminal 16 communicates with the gateway device 18 only through the router device 26, the user can control the air conditioner 12 in a stress-free situation by the use of the mobile terminal 16, as well as by the use of a remote controller of the air conditioner 12.

The user selects the communication methods between the mobile terminal 16 and the gateway device 18 because only the user knows a frequency of controls to the air conditioner 12 by the use of the mobile terminal 16.

As not shown in the figure, the control screen 30 of the mobile terminal 16 includes, besides the buttons described above, a button for on-off controlling the operation of the air conditioner 12 and a button for setting a timer by which an operation of the air conditioner 12 is automatically started at a given time.

Hereinbelow, an initial setting needed to control the air conditioner 12 by the use of the mobile terminal 16 is explained. Also, functions (features) of the wireless communication adaptor 14, mobile terminal 16, gateway device 18, and server device 22 needed for the initial setting are explained.

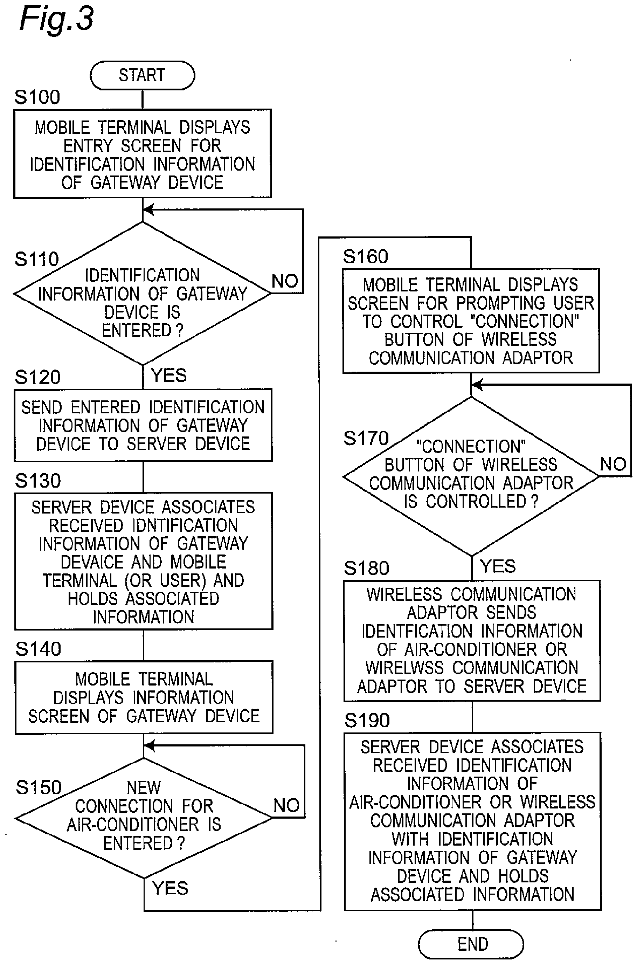

In the initial setting, a user registration setting is performed. The user registration setting is an essential initial setting so as to enable the user's mobile terminal 16 to communicate with the air conditioner 12 and registers the mobile terminal 16 or the user on the gateway device 18. The mobile terminal 16 (smartphone into which the control program for the air conditioner 12 is installed) is adapted to perform the registration setting. An example of a sequence of registration setting are explained with reference to flow diagram in Fig. 3.

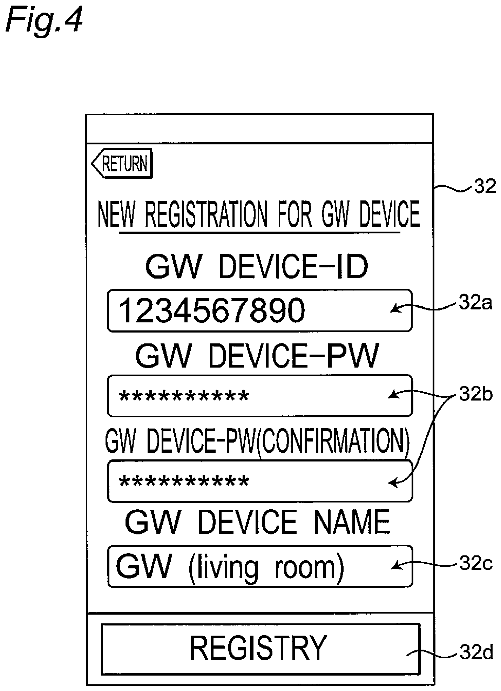

As shown in Fig. 3, in step 100, the mobile terminal 16 displays an entry screen 32, through which the user enters an identification information of the gateway device 14 on the mobile terminal 16 and which is shown in Fig. 4, in the touch panel 16a. The entry screen 32 shown in Fig. 4 is just one example and is displayed, for example, in response to the user's touch on a "GW registration " button in the touch panel 16a.

The identification information of the gateway device 14 entered on the mobile terminal 16 through the entry screen 32 shown in Fig. 4 is, for example, an unique number of the gateway device 14. In the embodiment, it are identification number (ID) 32a previously-configured and a password (PW) 32b. A name 32c of the gateway device 14 defined by the user is entered on the mobile terminal 16 as the identification information of the gateway device 14.

After the user enters the identification information of the gateway device 14 at step S110, the mobile terminal 16, in the succeeding step S120, sends the entered identification information of the gateway device 14 and the identification information of the mobile terminal 16 (or identification information of the user) to the server device 22.

The identification information of the mobile terminal 16 may be any information as long as the mobile terminal 16 is distinguished from another mobile terminal, and thus be an identification number (ID) of the mobile terminal 16 or a serial number of the air conditioner - control program installed in the mobile terminal 16. The identification information of the user is, for example, a name, ID, or password of the user entered on the mobile terminal 16.

The transmission from the mobile terminal 16 to the server device 22 may be through the internet 20 and the router device 26 or only through the internet 20 without passing through the router device 26.

In step S130, the server device 22 receives the identification information of the gateway device 18 and the identification information of the mobile terminal 16 (or of the user) sent from the mobile terminal 16, associates the information with each other, and then memorizes the associated information. Consequently, the mobile terminal 16 or the user is associated with and registered on the gateway device 18.

The registered mobile terminal 16 or the mobile terminal 16 of the registered user can communicate with the gateway device 18 only through the router device 26 or through the internet 20 and the router device 26 without re-entering of the user the identification information of the gateway device 18 on the mobile terminal 16. That is, the air conditioner 12 can be controlled by the use of the mobile terminal 16.

Specifically, the mobile terminal 16 is adapted to send a communication request signal including the identification information of the mobile terminal 16 (or of the user) to the gateway device 18 when the mobile terminal 16 gets access to the gateway device 18 only through the router device 26 or through the internet 20 and the router device 26.

The gateway device 18 receiving the communication request signal from the mobile terminal 16 sends the identification information of the mobile terminal 16 (or of the user) included in the communication request signal to the server device 22 through the internet 20 and the router device 26.

The server device 22 is adapted to authenticate the validity of the mobile terminal 16 having sent the communication request signal on the basis of the identification information of the mobile terminal 16 (or of the user) included in the communication request signal. That is, the server device 22 functions as an authentication server for the mobile terminal 16.

Specifically, the server device 22 is adapted to determine whether the identification information of the mobile terminal 16 (or of the user) included in the communication request signal conforms to the identification information of the mobile terminal 16 (or of the user) stored (registered) with it associating with the gateway device 18.

After the validity of the mobile terminal 16 having sent the communication request signal is authenticated by the server device 22, the gateway device 18 starts to communicate with the mobile terminal 16.

By performing the authentication of the mobile terminal getting access to the gateway device 18 as noted above, the mobile terminal 16 can communicate with the gateway device 18 without re-entering of the user the identification information of the gateway device 18 on the mobile terminal 16. It is suppressed that the air conditioner 12 operates on the basis of a control signal sent from a non-authenticated mobile terminal, for example, a control signal sent from a mobile terminal of other people. That is, the air conditioner 12 can be controlled only by the use of the mobile terminal 16 of the authenticated user.

Authentication of the mobile terminal 16 by the server device 22 may be omitted. For example, the mobile terminal 16 may send the control signal including the identification information of the gateway device 18 and then the gateway device 18 may receive only the control signal including the identification information thereof.

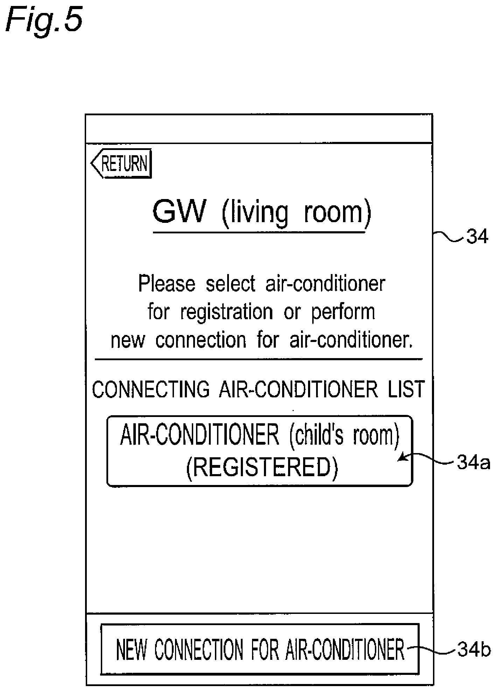

In step S140, the mobile terminal 16 displays an information screen 34 shown in Fig.5, for presenting the information about the gateway device 18, in the touch panel 16a. The information screen 34 shown in Fig. 5 is just one example and presents the information about the gateway device 18 of which the name is defined by the user as "GW (living room)". Specifically, an information about the air conditioner 12 (air conditioner in a child's room) connected to the gateway device 18 is presented. The information screen 34 shown in Fig. 5 also includes a "new connection for air-conditioner" button 34b for newly connecting the wireless communication adaptor 14 (that is, air conditioner 12) and the gateway device 18.

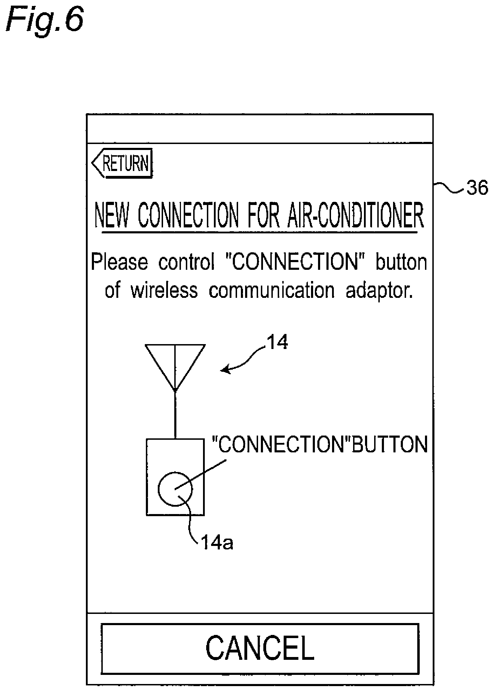

After the user touches the "new connection for air-conditioner" button 34b at step S150, the mobile terminal 16, in the succeeding step S160, displays a screen 36 (See Fig. 6), for prompting the user to control a "connection" button 14a of the wireless communication adaptor 14, in the touch panel 16a. The screen 36 includes an image of the wireless communication adaptor 14 having the "connection" button 14a.

The wireless communication adaptor 14, as shown in Fig. 1, has the "connection" button 14a for newly connecting to the gateway device 18. The wireless communication adaptor 14 is adapted to obtain the identification information of the air conditioner 12 (for example, production number or model number) from the operation control part of the air conditioner 12, when the "connection" button 14a is controlled by the user. The wireless communication adaptor 14 also is adapted to output the obtained identification information of the air conditioner 12 as a signal. Instead of the identification information of the air conditioner 12, an identification information of the wireless communication adaptor 14 may be output as a signal. In this case, the identification information of the wireless communication adaptor 14 is, for example, identification number, production number, and like.

The "connection" button 14a of the wireless communication adaptor 14 is controlled by the user in step S170, and then, in the succeeding step S180, the wireless communication adaptor 14 sends the identification information of the air conditioner 12 or the wireless communication adaptor 14 to the server device 22 through the gateway device 18.

In step S190, the server device 22 receives the identification information of the air conditioner 12 or the wireless communication adaptor 14 from the gateway device 18 and then memorizes the received identification information with it associated with the identification information of the gateway device 18 stored in a memory part (memorized at step S130).

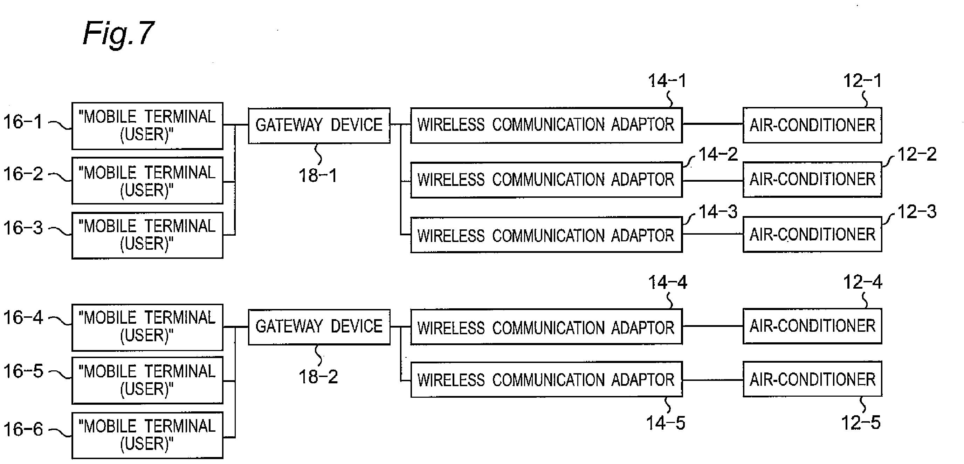

By the processes of steps S130 and S190, as conceptually shown in Fig. 7, the server device 22 can hold an information about a correspondence relationship between the mobile terminal 16 (or the user), the gateway device 18, and the air conditioner 12 (or the wireless communication adaptor 14). For example, the mobile terminal 16-1 can send the control signal for controlling the air conditioner 12-3 to the gateway device 18-1 connected to the air conditioner 12-3, on the basis of the correspondence relationship information. Also, as shown in Fig. 5, a list of a plurality of air conditioner 12 connected to the gateway device 18 can be included in the information screen 34 of the gateway device 18.

The name of the air conditioner 12 may be defined by the user, as well as the name of the gateway device 18 desirably defined by the user through the new registration screen 32 for the gateway device 18 shown in Fig. 4.

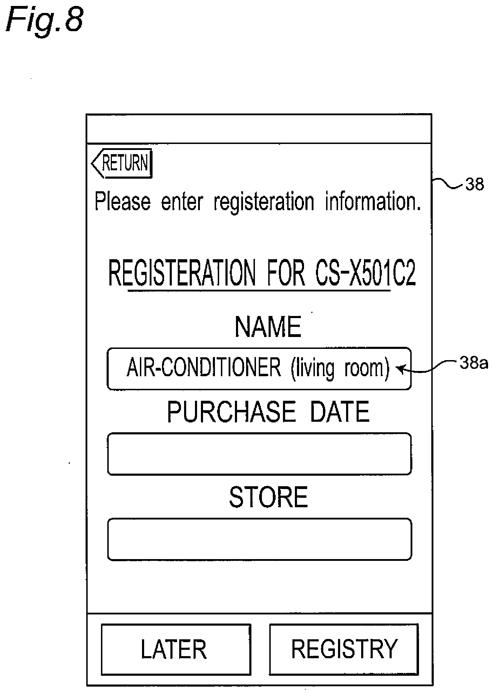

For example, as shown in Fig. 8, the mobile terminal 16 is adapted to enable the user to register the air conditioner 12. The mobile terminal 16 displays a user registration screen 38 for the user registration of the air conditioner 12 in the touch panel 16a. An information about purchase date and store necessary to perform the user registration, as well as the desirable name 38a of the air conditioner 12, is entered through the user registration screen 38. The server device 22 can hold the user-desired name as the identification information of the air conditioner 12. The user registration screen 38 for the air conditioner 12 shown in Fig. 8 is just one example.

As noted above, since the server device 22 holds the information about the correspondence relationship between the mobile terminal 16 (or the user), the gateway device 18, and air conditioner 12 (or the wireless communication adaptor 14), the manufacturer of the air conditioner 12 can understand a connection environment (usage environment) between the air conditioner 12 and the mobile terminal 16 through the gateway device 18 and the wireless communication adaptor 14.

On the other hand, the user can easily restore the connection environment between the air conditioner 12 and the mobile terminal 16 through the gateway device 18 and the wireless communication adaptor 14 by the use of the information about the correspondence relationship between the gateway device 18 and the air conditioner 12 (or the wireless communication adaptor 14) stored in the server device, for example, when the user renews the mobile terminal 12, when the program for controlling the air conditioner is re-installed, and like.

For example, a connection definition file including the information about correspondence relationship between the air conditioner 12 (or the wireless communication adaptor 14) and the gateway device 18 is downloaded from the server device 22 and then is installed in the mobile terminal 16. Thereby easily restores the environment (control system) for controlling the air conditioner 12. That is, it becomes possible to control the plurality of air conditioners 12 without re-entering the identification information of the gateway device 18 and without controlling the "connection" buttons 14a of the wireless communication adaptors 14 of the plurality of the air conditioner 12.

Hereinbelow, the connection between the air conditioner 12 and the wireless communication adaptor 14 is explained in detail.

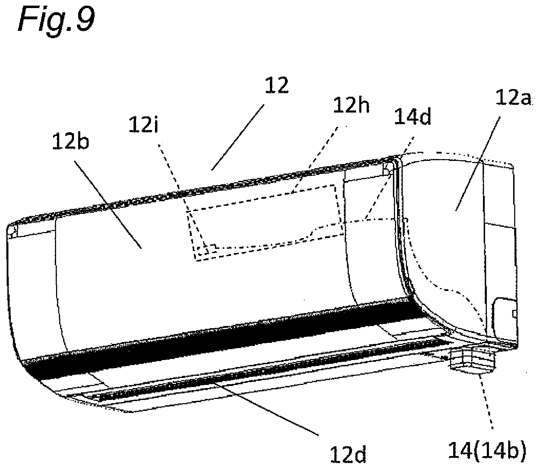

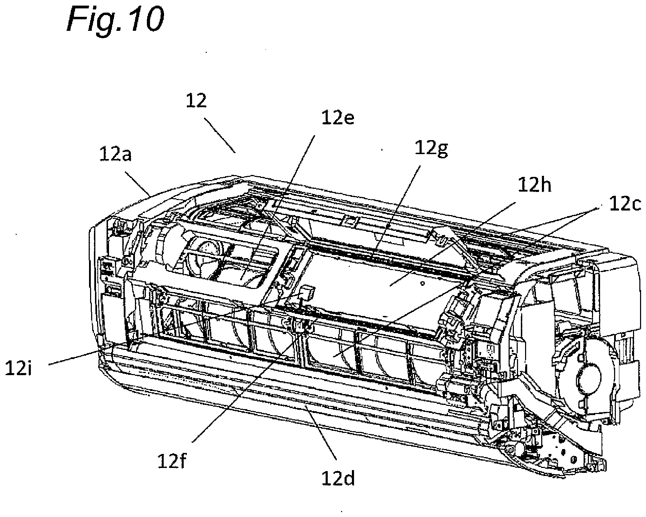

Fig. 9 is a perspective view showing an appearance of the air conditioner 12. Fig. 10 is a perspective view showing an inside of the air conditioner 12.

As shown in Fig. 9, the air conditioner 12 has a body 12a made up mostly of an underframe and a front panel 12b openably covering a front portion of the body 12a (a portion on the face-side of the air conditioner 12). The body 12a and the front panel 12b are made mostly from synthetic resin.

As shown in Fig. 10 in which the front panel 12 is omitted, the air conditioner 12 has intake openings 12c which is formed on a top portion and the front portion of the air conditioner 12 and through which an air is introduced into the body 12 a, and an outtake opening 12d which is formed on a bottom portion and through which the air in the body 12a is blown outside (in the house 24). When the air is introduced into the body 12a through the intake openings 12c, the front panel 12b is opened so as to expose the intake opening 12c formed on the front portion of the body 12a. Between the intake openings 12c and the outtake opening 12d, a fan 12e generating a flow of the air from the intake openings 12c to the outtake opening 12d and a heat exchanger (not shown) exchanging heat with the air introduced into the body 12a are disposed.

To a frame 12f positioned at a top-front portion of the body 12a of the air conditioner 12, a control box 12g for controlling the air conditioner 12 is attached. The operation control part 12h is accommodated in the control box 12g.

The operation control part 12h has a control substrate on which an adaptor connection terminal 12i for connecting the control substrate and the wireless communication adaptor 14 is mounted directly.

If the wireless connection adaptor 14 through which the air conditioner 12 is controlled by the use of the mobile terminal 16 is not connected with the adaptor connection terminal 12i of the operation control part 12h, the air conditioner 12 performs an air conditioning operation on the basis of a control sequence incorporated into the operation control part 12h.

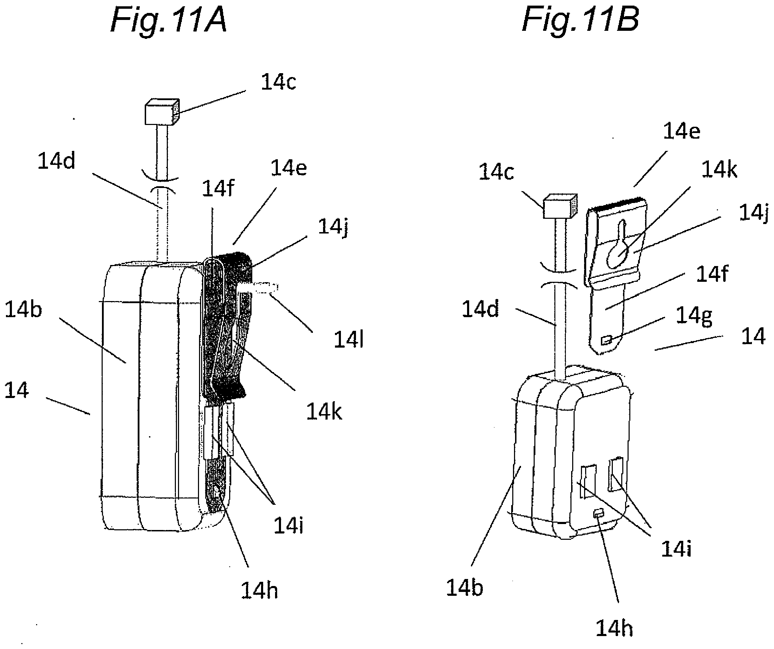

The wireless communication adaptor 14 has, as shown in Fig. 11, a communication device body 14b communicating with the gateway device 18, a connector 14c detachable connecting to the adaptor connection terminal 12i of the operation control part 12h of the air conditioner 12, and a lead wire 14d connecting the communication device body 14b and the connector 14c.

The wireless communication adaptor 14 has an attachment 14e for attaching the communication device body 14b to the air conditioner 12 (the body 12a) or the room of the house 24 in which the air conditioner 12 is placed (for example, a wall surface on which the air conditioner 12 is mounted , a post of the indoor close to the air conditioner 12, and like).

Specifically, in the embodiment, the attachment 14e for the wireless communication adaptor 14 , as shown in Fig. 11, is a clip-like member made by doubling up a piece of metal sheet in a U-shape. The attachment 14e also is fixed to a back surface of the communication device body 14b through a base part 14f thereof. In the embodiment, the base part 14f of the attachment 14e has a through hole 14g formed thereon. The communication device body 14b has a protrusion 14h engaging with the through hole 14g and formed on the back surface thereof. The communication device body 14b also has a pair of engaging parts 14i formed on the back surface thereof.. The base part 14f of the attachment 14e is moved along the back surface of the communication device body 14b and then inserted between the pair of engaging parts 14i.

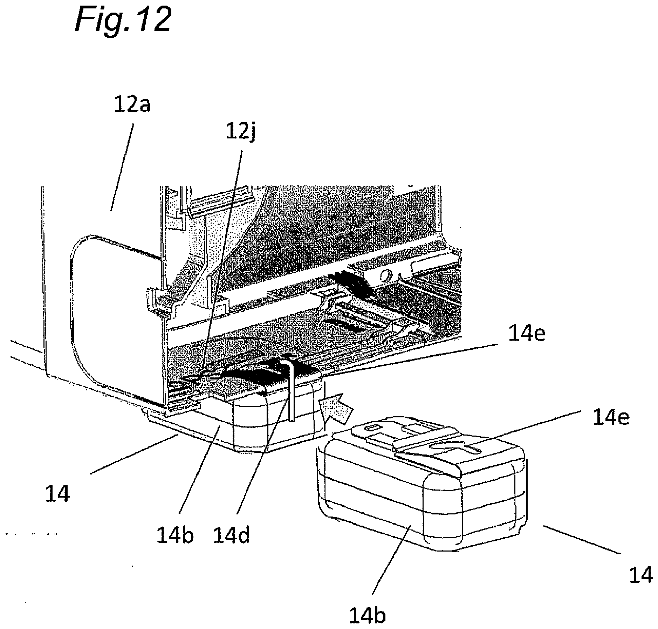

The attachment 14e of the wireless communication adaptor 14 has an opposed part 14j opposite to the base part 14f at intervals. As shown in Fig. 12, the communication device body 14b of the wireless communication adaptor 14 can be attached to the air conditioner 12 by sandwiching a housing rim 12j of the body 12a of the air conditioner 12 between the base part 14f and the opposed part 14j of the attachment 14e. The communication device body 14b of the wireless communication adaptor 14 may be attached to the body 12a of the air conditioner 12 without exposing to outside, instead of with the communication device body 14b exposed outside of the body 12a as shown in Fig. 12.

In the housing of the body 12a of the air conditioner 12, the rim 12j sandwiched by the attachment 14e of the wireless communication adaptor 14 preferably is positioned away from the outtake opening 12d. Specifically, in the housing of the body 12a of the air conditioner 12, the rim 12j sandwiched by the attachment 14e preferably is positioned such that the communication device body 14b with the attachment 14e thereof holding the rim 12j of the body 12a is not opened up directly to the air blown from the outtake opening 12d. Therefore, it is suppressed that, in the cooling operation of the air conditioner 12, the communication device body 14b of the wireless communication device 14 is opened up to a volume of cold air blown from the outtake opening 12d. Consequently, it is suppressed that a dew condensation (beading) occurs on a surface of the communication device body 14b of the wireless communication adaptor 14, and thereby avoids the dew condensation interrupting the communication between the communication device body 14b and the gateway device 18. That is, during the cooling operation of the air conditioner 12, a quality in the communication between the wireless communication adaptor 14 and the gateway device 18 is highly maintained, and thus a reliability of the communication is improved.

The attachment 14e of the wireless communication adaptor 14 further has a keyhole-like mounting hole 14k formed on the opposed part 14j and used when the communication device body 14b is mounted on the room of the house 24. The communication device body 14b of the wireless communication adaptor 14 can be mounted on the room by engaging the mounting hole 14k and a screw 141 mounted on a wall surface of the room.

By the use of the attachment 14e, the communication device body 14b of the wireless communication adaptor 14 can be attached to the air conditioner 12 or on the room of the house 24 in which the air conditioner 12 is placed. Thereby improves an arbitrary property in the position of the communication device body 14b of the wireless communication adaptor 14.

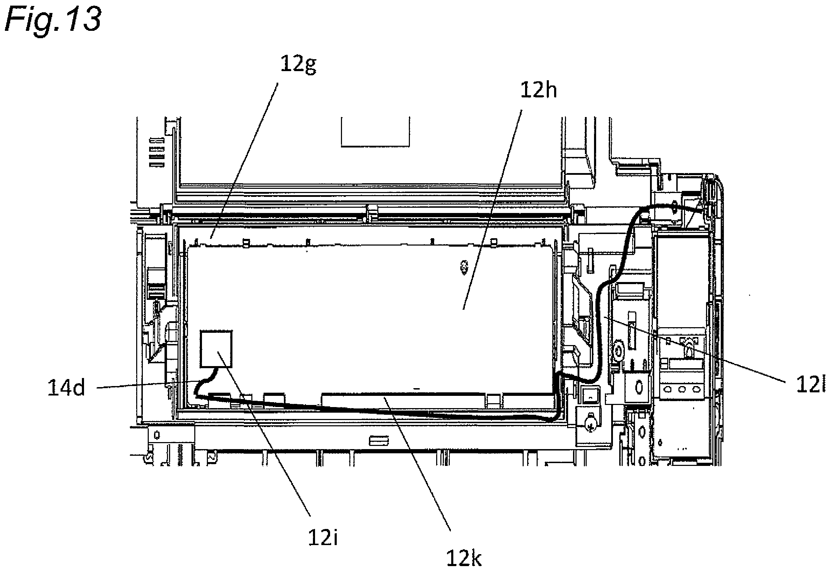

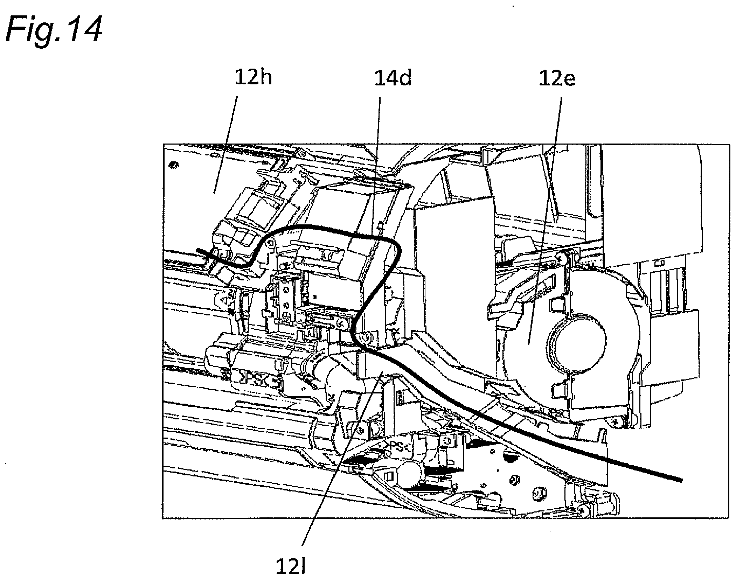

When the communication device body 14b of the wireless communication adaptor 14 is inside of the air conditioner 12, for example, when the housing rim 12j of the body 12a of the air conditioner 12 is held by the attachment 14e as shown in Fig. 12, it is suppressed that the communication device body 14b spoils a design of the appearance of the air conditioner 12. In this case, lead wire 14d of the wireless communication adaptor 14 is laid at any position inside of the air conditioner 12 and connected to the adaptor connection terminal 12i of the operation control part 12h. For example, as shown in Figs. 13 and 14, the lead wire 14d is connected to the adaptor connection terminal 12i of the operation control part 12 by passing through a lead wire guide groove 12k formed on the control box 12g accommodating the operation control part 12h and guiding lead wire 14d and a duct 121 disposed on the outer-side of the fan 12e.

It is possible that a stability in the communication between the communication device 14b and the gateway device 18 degrades, if the communication device body 14b of the wireless communication adaptor 14 is disposed inside the air conditioner 12 without exposing outside. For example, when the air conditioner 12 is mounted on the wall surface of the room in the house 24 through a metal mounting plate (not shown), it is possible that the communication between the communication device body 14b and the gateway device 18 is interrupted by the metal mounting plate. If there is such possibility, as shown in Fig. 12, the communication device body 14b of the wireless communication adaptor 14 is attached to the air conditioner 12 through the attachment 14e with it exposing outside of the air conditioner 12.

Although the communication device body 14b of the wireless communication adaptor 14 is attached to the air conditioner 12 with it exposing outside, it is possible to degrade the stability of in the communication between the communication device body 14b and the gateway device 18. In this case, the communication device body 14b is disposed away from the air conditioner 12. For example, the communication device body 14b is attached on the wall surface of the room by engaging the mounting hole 14k of the attachment 14e and the screw 141 mounted on a portion of the wall surface of the room in the house 24 positioned away from the air conditioner 12. In this case, a part of lead wire 14d is extended from inside of the air conditioner 12 and laid on the wall surface of the room, for example.

As noted above, since the arbitrary property in the position of the communication device body 14b of the wireless communication adaptor 14 is high, the communication device body 14 can be disposed at position such that the communication between the communication device body 14b of the wireless adaptor 14 and the gateway device 18 can become stable.

Concerning the layout of the lead wire 14d of the wireless communication adaptor 14, as shown in Fig. 10, the adaptor connection terminal 12i of the operation control part 12h connected to the lead wire 14d (the connector 14c) preferably is disposed on the front portion of the body 12a of the air conditioner 12. For example, as shown in Fig. 10, the operation control part 12h is disposed on the front portion of the body 12a of the air conditioner 12 and the adaptor connection terminal 12i is mounted directly on the operation control part 12h. Therefore, the lead wire 14d can is connected easily to the adaptor connection terminal 12i of the operation control part 12h after the front panel 12b opened. Consequently, a working times for installing the wireless communication adaptor 14 including laying of the lead wire 14d can be compressed.

According to the embodiment, the user can select the communication only through the router device 26 or the communication through the internet 20 and the router device 26, as the communication between the mobile terminal 16 and the gateway device 18. By selecting the communication only through the router device 26, the user being in a house in which the air conditioner 12 is placed can control the air conditioner 12 by the use of the, mobile terminal in a stress-free situation. By selecting the communication through the internet 20 and the router device 26, the user being outside of the house can control the air conditioner 12 by the use of the mobile terminal 16.

The invention has described with reference to the embodiment described above, however, the invention is not limited to the embodiment.

For example, in the above embodiment, the mobile terminal for controlling the air conditioner is a mobile terminal used widely such as a smartphone. However, the invention is not limited to this. For example, a mobile terminal dedicating the controls of the air conditioner may be used.

Also, in the above embodiment, one server device 22 authenticates the validity of the mobile terminal 16 and holds the information of the gateway device 18 and like. However, the invention is not limited to this. A server device for the authentication of the mobile terminal and an another server device for holding the information may be used.

Moreover, as shown in Fig. 13, the adaptor connection terminal 14i connected to the wireless communication adaptor 14 may be mounted indirectly on the operation control part 12h of the air conditioner 12 through a lead wire, instead of directly to the operation control part 12h. In this case, the adaptor connection terminal 14i can be disposed at any position in the air conditioner 12. For example, the adaptor connection terminal 14i may be disposed on an outer surface of the air conditioner 12. In this case, the adaptor connection terminal 14i is covered by a cap for example when the wireless communication adaptor 14 is not connected to the adaptor connection terminal 14i. Additionally, if the adaptor connection terminal 12i is mounted directly on the operation control part 12h as shown in Fig. 13, a lead wire and like becomes unnecessary and thereby improves a workability in an assembly and decreases a cost.

Moreover, the wireless communication adaptor 14 may be a part of the air conditioner 12 incorporated integrally into the air conditioner 12, instead of detachably into air conditioner 12, that is, instead of an optional part attachable to the air conditioner 12.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A control system (10) for controlling a household electrical appliance (12), the control system (10) for controlling the household electrical appliance (12) comprising:
a mobile terminal (16) capable of connecting to a router device (26) and an internet (20) and sending a control signal for controlling the household electrical appliance (12);
a communication device (14) connected to the household electrical appliance (12) and capable of receiving the control signal; and
a relay device (18) connected to the router device (26) and capable of relaying communication between the communication device (14) and the mobile terminal (16),
wherein the mobile terminal (16) and the relay device (18) are adapted to have a first communication between the mobile terminal (16) and the relay device (18) only through the router device (26) and a second communication between the mobile terminal (16) and the relay device (18) through the internet (20) and the router device (26),
**characterized in that**
the mobile terminal (16) is adapted to enable a user to select the first or second communication by the use of the mobile terminal (16), and
the mobile terminal (16) is adapted to inform the user of a notice about the selected first or second communication before the user performs a control for sending the control signal.

2. The control system (10) for controlling the household electrical appliance (12) according to claim 1, further comprising:
a server device (22) connected to the internet (20) and configured to authenticate whether a mobile terminal (16) accessing to the relay device (18) only through the router device (26) or through the internet (20) and the router device (26) is the mobile terminal (16) of a valid user allowed to communicate with the relay device (18),
wherein the relay device (18) has the first or second communication with the mobile terminal (16) authenticated by the server device (22) as the mobile terminal (16) of the valid user.

3. The control system (10) for controlling the household electrical appliance (12) according to claim 1 or 2, further comprising:
a server device connected to the internet (20), configured to associate an identification information of the mobile terminal (16) or the user, an identification information of the relay device (18), and an identification information of at least one communication device connected to the relay device (18) or at least one household electrical appliance (12) connected to the communication device, and configured to hold the associated information.

4. The control system (10) for controlling the household electrical appliance (12) according to anyone of claims 1 to 3,
wherein the communication device is detachably provided on the household electrical appliance (12).

5. The control system (10) for controlling a household electrical appliance (12) according to anyone of claims 1 to 4,
wherein the household electrical appliance (12) is an air conditioner (12), and
the communication device is connected to an operation control part (12h) of the air conditioner (12) for controlling an air-conditioning operation.

6. The control system (10) for controlling a household electrical appliance (12) according to claim 5,
wherein the communication device has a communication device body (14b) capable of communicating with the relay device (18), a connecter detachably connecting to a communication device connection terminal (12i) of the operation control part (12h) of the air conditioner (12), a lead wire (14d) connecting the communication device body (14b) and the connector (14c), and an attachment (14e) for attaching the communication device body (14b) to the air conditioner (12) or a room in which the air conditioner (12) is placed.

7. The control system (10) for controlling a household electrical appliance (12) according to claim 6,
wherein the air conditioner (12) has a body and a front panel (12b) openably covering a front portion of the body,
the communication device connection terminal (12i) of the operation control part (12h) of the air conditioner (12) is disposed on the front portion of the body of the air conditioner (12), and
the attachment (14e) of the communication device is adapted to hold a housing rim (12j) of the body of the air conditioner (12).

8. The control system (10) for controlling a household electrical appliance (12) according to claim 7,
wherein the housing rim (12j) of the body of the air conditioner (12) held by the attachment (14e) is positioned at a position at which the communication device with the attachment (14e) holding the housing rim (12j) is not opened up to an air blown from an outtake opening (12d) of the air conditioner (12).

9. The control system (10) for controlling a household electrical appliance (12) according to claim 6,
wherein the operation control part (12h) of the air conditioner (12) is disposed on a front portion of a body of the air conditioner (12), and
the communication device connection terminal (12i) is mounted directly on the operation control part (12h).

10. A program for controlling a household electrical appliance (12) installed in a mobile terminal (16) connectable to a router device (26) and an internet (20), the program for controlling the household electrical appliance (12) making the mobile terminal (16) function as,
a means for sending a control signal for controlling the household electrical appliance (12),
a means for having a first communication only through the router device (26) and a second communication through the internet (20) and the router device (26) with a relay device (18) relaying a communication between the mobile terminal (16) and a communication device, the communication device connected to the household electrical appliance (12) and receiving the control signal,
**characterized in that**
the program further making the mobile terminal function as
a means for enabling a user to select the first or second communication, and
a means for informing the user of a notice about the selected first or second communication before the user performs a control for sending the control signal.

## Patentansprüche

1. Steuersystem (10) zum Steuern einer elektrischen Haushaltsvorrichtung (12), wobei das Steuersystem (10) zum Steuern der elektrischen Haushaltsvorrichtung (12) enthält:
ein mobiles Endgerät (16), das mit einer Routervorrichtung (26) und einem Internet (20) verbunden werden kann und ein Steuersignal zum Steuern der elektrischen Haushaltsvorrichtung (12) senden kann;
eine Kommunikationsvorrichtung (14), die mit der elektrischen Haushaltsvorrichtung (12) verbunden ist und das Steuersignal empfangen kann; und
eine Relaisvorrichtung (18), die mit der Routervorrichtung (26) verbunden ist und die Kommunikation zwischen der Kommunikationsvorrichtung (14) und dem mobilen Endgerät (16) weiterleiten kann,
wobei das mobile Endgerät (16) und die Relaisvorrichtung (18) dafür ausgelegt sind, eine erste Kommunikation zwischen dem mobilen Endgerät (16) und der Relaisvorrichtung (18) nur über die Routervorrichtung (26) und eine zweite Kommunikation zwischen dem mobilen Endgerät (16) und der Relaisvorrichtung (18) über das Internet (20) und die Routervorrichtung (26) aufzuweisen,
**dadurch gekennzeichnet, dass**
das mobile Endgerät (16) so ausgelegt ist, dass ein Benutzer die erste oder die zweite Kommunikation unter Verwendung des mobilen Endgeräts (16) auswählen kann, und
das mobile Endgerät (16) dafür ausgelegt ist, den Benutzer über eine Mitteilung über die ausgewählte erste oder zweite Kommunikation zu informieren, bevor der Benutzer eine Steuerung zum Senden des Steuersignals durchführt.

2. Steuersystem (10) zum Steuern der elektrischen Haushaltsvorrichtung (12) nach Anspruch 1, weiterhin enthaltend:
eine Servervorrichtung (22), die mit dem Internet (20) verbunden und dafür konfiguriert ist, zu authentifizieren, ob ein mobiles Endgerät (16), das nur über die Routervorrichtung (26) oder über das Internet (20) und die Routervorrichtung (26) auf die Relaisvorrichtung (18) zugreift, das mobile Endgerät (16) eines gültigen Benutzers ist, der mit der Relaisvorrichtung (18) kommunizieren darf,
wobei die Relaisvorrichtung (18) die erste oder zweite Kommunikation mit dem mobilen Endgerät (16) aufweist, die durch die Servervorrichtung (22) als das mobile Endgerät (16) des gültigen Benutzers authentifiziert ist.

3. Steuersystem (10) zum Steuern der elektrischen Haushaltsvorrichtung (12) nach Anspruch 1 oder 2, weiterhin enthaltend:
eine Servervorrichtung, die mit dem Internet (20) verbunden ist und dafür konfiguriert ist, eine Identifikationsinformation des mobilen Endgeräts (16) oder des Benutzers, eine Identifizierungsinformation der Relaisvorrichtung (18), und eine Identifizierungsinformation mindestens einer mit der Relaisvorrichtung (18) verbundenen Kommunikationsvorrichtung oder mindestens einer mit der Kommunikationsvorrichtung verbundenen elektrischen Haushaltsvorrichtung (12) zuzuordnen, und dafür konfiguriert ist, die zugeordnete Information zu halten.

4. Steuersystem (10) zum Steuern der elektrischen Haushaltsvorrichtung (12) nach einem der Ansprüche 1 bis 3,
wobei die Kommunikationsvorrichtung abnehmbar an der elektrischen Haushaltsvorrichtung (12) vorgesehen ist.

5. Steuersystem (10) zum Steuern der elektrischen Haushaltsvorrichtung (12) nach einem der Ansprüche 1 bis 4,
wobei die elektrische Haushaltsvorrichtung (12) eine Klimaanlage (12) ist, und
die Kommunikationsvorrichtung mit einem Funktionssteuerteil (12h) der Klimaanlage (12) zum Steuern einer Klimatisierungsfunktion verbunden ist.

6. Steuersystem (10) zum Steuern der elektrischen Haushaltsvorrichtung (12) nach Anspruch 5,
wobei die Kommunikationsvorrichtung einen Kommunikationsvorrichtungskörper (14b), der mit der Relaisvorrichtung (18) kommunizieren kann, einen Verbinder, der lösbar mit einem Kommunikationsvorrichtungsverbindungsanschluss (12i) des Funktionssteuerteils (12h) der Klimaanlage (12) verbunden ist, einen Leitungsdraht (14d), der den Kommunikationsvorrichtungskörper (14b) und den Verbinder (14c) verbindet, und einen Aufsatz (14e) zum Anbringen des Kommunikationsvorrichtungskörpers (14b) an die Klimaanlage (12) oder in einem Raum, in dem die Klimaanlage (12) angeordnet ist, aufweist.

7. Steuersystem (10) zum Steuern der elektrischen Haushaltsvorrichtung (12) nach Anspruch 6,
wobei die Klimaanlage (12) einen Körper und eine Frontplatte (12b) aufweist, die einen vorderen Teil des Körpers öffnungsfähig abdeckt,
der Kommunikationsvorrichtungsverbindungsanschluss (12i) des Funktionssteuerteils (12h) der Klimaanlage (12) auf dem vorderen Teil des Körpers der Klimaanlage (12) angeordnet ist, und
der Aufsatz (14e) der Kommunikationsvorrichtung dazu ausgelegt ist, einen Gehäuserand (12j) des Körpers der Klimaanlage (12) zu halten.

8. Steuersystem (10) zum Steuern der elektrischen Haushaltsvorrichtung (12) nach Anspruch 7,
wobei der Gehäuserand (12j) des durch den Aufsatz (14e) gehaltenen Körpers der Klimaanlage (12) an einer Stelle positioniert ist, an der die Kommunikationsvorrichtung mit dem den Gehäuserand (12j) haltenden Aufsatz (14e) nicht zu einer aus einer Auslassöffnung (12d) der Klimaanlage (12) geblasenen Luft geöffnet ist.

9. Steuersystem (10) zum Steuern der elektrischen Haushaltsvorrichtung (12) nach Anspruch 6,
wobei das Funktionssteuerteil (12h) der Klimaanlage (12) an einem vorderen Teil eines Körpers der Klimaanlage (12) angeordnet ist, und
der Kommunikationsvorrichtungsverbindungsanschluss (12i) direkt auf dem Funktionssteuerteil (12h) angebracht ist.

10. Programm zum Steuern einer elektrischen Haushaltsvorrichtung (12), das in einem mobilen Endgerät (16) installiert ist, das mit einer Routervorrichtung (26) und einem Internet (20) verbunden werden kann, wobei das Programm zum Steuern der elektrischen Haushaltsvorrichtung (12) das mobile Endgerät (16) fungieren lässt als
Mittel zum Senden eines Steuersignals zum Steuern der elektrischen Haushaltsvorrichtung (12),
Mittel zum Durchführen einer ersten Kommunikation nur über die Routervorrichtung (26) und einer zweiten Kommunikation über das Internet (20) und die Routervorrichtung (26) mit einer Relaisvorrichtung (18), die eine Kommunikation zwischen dem mobilen Endgerät (16) und einer Kommunikationsvorrichtung überträgt, wobei die Kommunikationsvorrichtung mit der elektrischen Haushaltsvorrichtung (12) verbunden ist und das Steuersignal empfängt,
**dadurch gekennzeichnet, dass**
das Programm das mobile Endgerät ferner fungieren lässt als
Mittel, mit dem ein Benutzer die erste oder zweite Kommunikation auswählen kann,und
Mittel zum Informieren des Benutzers über eine Mitteilung über die ausgewählte erste oder zweite Kommunikation, bevor der Benutzer eine Steuerung zum Senden des Steuersignals durchführt.

## Revendications

1. Système de commande (10) pour commander un appareil électroménager (12), le système de commande (10) pour commander l'appareil électroménager (12) comprenant :
un terminal mobile (16) capable de se connecter à un dispositif routeur (26) et à internet (20) et d'envoyer un signal de commande pour commander l'appareil électroménager (12) ;
un dispositif de communication (14) connecté à l'appareil électroménager (12) et capable de recevoir le signal de commande ; et
un dispositif relais (18) connecté au dispositif routeur (26) et capable de relayer une communication entre le dispositif de communication (14) et le terminal mobile (16),
dans lequel le terminal mobile (16) et le dispositif relais (18) sont conçus pour avoir une première communication entre le terminal mobile (16) et le dispositif relais (18) uniquement par l'intermédiaire du dispositif routeur (26) et une seconde communication entre le terminal mobile (16) et le dispositif relais (18) par l'intermédiaire de l'internet (20) et du dispositif routeur (26),
**caractérisé en ce que**
le terminal mobile (16) est conçu pour permettre à un utilisateur de sélectionner la première ou la seconde communication par l'utilisation du terminal mobile (16), et
le terminal mobile (16) est conçu pour informer l'utilisateur d'une notification concernant la première ou la seconde communication sélectionnée avant que l'utilisateur ne réalise une commande pour envoyer le signal de commande.

2. Système de commande (10) pour commander l'appareil électroménager (12) selon la revendication 1, comprenant en outre :
un dispositif serveur (22) connecté à l'internet (20) et configuré pour authentifier si un terminal mobile (16) accédant au dispositif relais (18) uniquement par l'intermédiaire du dispositif routeur (26) ou par l'intermédiaire de l'internet (20) et du dispositif routeur (26) est le terminal mobile (16) d'un utilisateur valide autorisé à communiquer avec le dispositif relais (18),
dans lequel le dispositif relais (18) a la première ou la seconde communication avec le terminal mobile (16) authentifié par le dispositif serveur (22) en tant que terminal mobile (16) de l'utilisateur valide.

3. Système de commande (10) pour commander l'appareil électroménager (12) selon la revendication 1 ou 2, comprenant en outre :
un dispositif serveur connecté à l'internet (20), configuré pour associer une information d'identification du terminal mobile (16) ou de l'utilisateur, une information d'identification du dispositif relais (18), et une information d'identification d'au moins un dispositif de communication connecté au dispositif relais (18) ou au moins un appareil électroménager (12) connecté au dispositif de communication, et configuré pour contenir les informations associées.

4. Système de commande (10) pour commander l'appareil électroménager (12) selon l'une quelconque des revendications 1 à 3,
dans lequel le dispositif de communication est disposé de manière amovible sur l'appareil électroménager (12).

5. Système de commande (10) pour commander un appareil électroménager (12) selon l'une quelconque des revendications 1 à 4,
dans lequel l'appareil électroménager (12) est un climatiseur (12), et
le dispositif de communication est connecté à une partie de commande de fonctionnement (12h) du climatiseur (12) pour commander une opération de climatisation.

6. Système de commande (10) pour commander un appareil électroménager (12) selon la revendication 5,
dans lequel le dispositif de communication comprend un corps de dispositif de communication (14b) capable de communiquer avec le dispositif relais (18), un connecteur relié de manière amovible à un terminal de connexion de dispositif de communication (12i) de la partie de commande de fonctionnement (12h) du climatiseur (12), un fil conducteur (14d) reliant le corps de dispositif de communication (14b) et le connecteur (14c), et une fixation (14e) pour fixer le corps de dispositif de communication (14b) au climatiseur (12) ou à une pièce dans laquelle le climatiseur (12) est placé.

7. Système de commande (10) pour commander un appareil électroménager (12) selon la revendication 6,
dans lequel le climatiseur (12) a un corps et un panneau avant (12b) recouvrant de manière apte à être ouverte une partie avant du corps,
le terminal de connexion de dispositif de communication (12i) de la partie de commande de fonctionnement (12h) du climatiseur (12) est disposé sur la partie avant du corps du climatiseur (12), et
la fixation (14e) du dispositif de communication est conçue pour maintenir un rebord de boîtier (12j) du corps du climatiseur (12).

8. Système de commande (10) pour commander un appareil électroménager (12) selon la revendication 7,
dans lequel le rebord de boîtier (12j) du corps du climatiseur (12) maintenu par la fixation (14e) est positionné au niveau d'une position au niveau de laquelle le dispositif de communication avec la fixation (14e) maintenant le rebord de boîtier (12j) n'est pas ouvert jusqu'à un air soufflé à partir d'une ouverture de sortie (12d) du climatiseur (12).

9. Système de commande (10) pour commander un appareil électroménager (12) selon la revendication 6,
dans lequel la partie de commande de fonctionnement (12h) du climatiseur (12) est disposée sur une partie avant d'un corps du climatiseur (12), et
le terminal de connexion de dispositif de communication (12i) est monté directement sur la partie de commande de fonctionnement (12h).

10. Programme pour commander un appareil électroménager (12) installé dans un terminal mobile (16) pouvant être connecté à un dispositif routeur (26) et à un internet (20), le programme pour commander l'appareil électroménager (12) faisant fonctionner la fonction de terminal mobile (16) comme
un moyen pour envoyer un signal de commande pour commander l'appareil électroménager (12),
un moyen pour avoir une première communication uniquement par l'intermédiaire du dispositif routeur (26) et une seconde communication par l'intermédiaire de l'internet (20) et du dispositif routeur (26) avec un dispositif relais (18) relayant une communication entre le terminal mobile (16) et un dispositif de communication, le dispositif de communication étant connecté à l'appareil électroménager (12) et recevant le signal de commande,
**caractérisé en ce que**
le programme faisant en outre fonctionner la fonction de terminal mobile comme
un moyen pour permettre à un utilisateur de sélectionner la première ou la seconde communication, et
un moyen pour informer l'utilisateur d'une notification concernant la première ou la seconde communication sélectionnée avant que l'utilisateur ne réalise une commande pour envoyer le signal de commande.
